# EUROPEAN PATENT SPECIFICATION

(11) **EP 3 319 770 B1**
(45) Date of publication and mention of the grant of the patent: **24.07.2019**
(21) Application number: 15853623.5
(22) Date of filing: 25.12.2015
(51) Int. Cl.: B29C 33/72, B25J 11/00, B29D 30/06

(54) **SIDEWALL CLEANING MACHINE FOR TIRE CURING MOLD**
SEITENWANDREINIGUNGSMASCHINE FÜR REIFENVULKANISIERFORM
MACHINE DE NETTOYAGE DE PAROI LATÉRALE POUR MOULE DE VULCANISATION DE PNEUS

(30) Priority: 25.12.2014 TR 201415812
(43) Date of publication of application: 16.05.2018
(73) Proprietor: Lang Yuzer Otomotiv Yan Sanayi ve Ticaret Anonim Sirketi, 59501 Cerkezkoy/Tekirdag (TR)
(72) Inventor: YUZER, Ismet, 59501 Cerkezkoy/Tekirdag (TR); TERKAN, Korkut, 59501 Cerkezkoy/Tekirdag (TR); DENIZLI, Okan, 59501 Cerkezkoy/Tekirdag (TR)
(74) Representative: Inal, Aysegul Seda
(86) International application number: PCT/TR2015/000390
(87) International publication number: WO 2016/105308

(56) References cited:
- WO-A1-00/61347
- DE-A1- 19 933 195
- DE-C1- 19 936 698

## Description

### TECHNICAL FIELD

Invention relates to a cleaning machine using dry ice to clean tire curing molds suitable for production of vehicle tires.

### PRIOR ART

Two-piece curing molds comprising a top and a bottom part as placed on each other are used in the vehicle tire production wherein one part is movable in a vertical direction to an open position. Vulcanization process is completed in such molds and removal of the clean cured rubber residues usually at the recesses of mold forming tire treads or other walls of upper halve (segment) and / or sidewalls of up and bottom part of molds.

It is known from the prior art that dry ice is blasted from a nozzle to inner mold volume to be cleaned in order to operate a non-abrasive cleaning process. Operation leads to a high decibel noise above the work safety limits for an operator. A method and device is disclosed by international patent publication WO9807548A1 wherein frozen gas pellets are used to clean vehicle tires by means of a robotically controlled apparatus. Document teaches receiving heated mold in a sound-proof cabin where a robot arm equipped with a nozzle is direct frozen gas pellets to the mold surface to be cleaned. Arm is disposed on a turntable in and rotated in order to clean complete mold surface. After completion of the operation mold is removed from the cabin. Preferable frozen gas is CO2 which access to the micro scaled openings and non-abrasive over the mold. Preferred embodiment requires a carriage assembly in order to transport molds to the sound insulated cabin. Additionally, it is necessary to remove to molds to be cleaned. Both cases increase cost of the production. International patent application WO0002709A1 discloses a similar embodiment. A dry-ice nozzle is provided at the free end of the support arm in a rotatable manner and integrated with the elongation axis of the support arm. Supply pipe from a dry ice machine is connected to the dry ice nozzle. An adjustment device attached to the support arm ensures The patent application WO 00/61347 A of the dry ice nozzle at an appropriate angle to the rotation axis. The patent WO0061347 discloses a tire mold cleaning apparatus that comprises a supporting frame; rotatable frame ; nozzle for spraying a cleaning material; shaft to rotate the rotatable frame; and manifold to traverse the control arm circumferentially of the tire mold about a vertical mold axis with the rotatable frame in down and up positions. The patent DE19933195 discloses frame moves onto a tire vulcanizing tool and has a handling unit which moves along a track and carries a cleaning and/or coating head. A drive unit adjusts the position of the cleaning head such that it maintains a set distance from the surface. The drive unit is uncoupled from the handling unit during movement of the latter and the cleaning head retains the set position relative to the tool surface. the patent DE19936698 discloses a tire mold cleaning apparatus has insulation hood suspended on moving, horizontally-extending arm of trolley. Interchangeable adapter ring seals opening against outer circumference of one mold section. Jet blasting unit and manipulator are completely enclosed by and accommodated within the mold section, adapter ring and insulation hood, which together form the cleaning chamber.

### BRIEF DESCRIPTION OF THE INVENTION

Object of the invention is a providing a cleaning machine that effective cleaning of both sidewalls of the tire curing mold.

Another object of the invention is to reduce the complexity of cleaning mechanism for the sidewalls of the tire curing mold.

In order to achieve above objective, invention is a cleaning machine for tire curing mold that comprises a basket, a rotational base which mounted into thereof, a nozzle provided in a movable manner on the rotational base,of extending towards the open side of the basket and having an intake connected to inlet in a fluid transferrable manner. In a preferred embodiment of the invention comprises the rotating joint which mounted radially to the outward direction on the rotational base and a telescopic arm which carrying the nozzle at the free end thereof and which of fastened on a rotational base with the rotating joint. Thus, adjusting of the angle properly between telescopic arm and rotational base is provided so as to providing do cleaning of the nozzle moved in a radial manner along the sidewall in accordance with diameter of sidewall. The proper angle is formed so as to provides spraying from the nozzle between the outer and inner diameters of sidewall while the rotating at the rotational base.

According to the invention the rotational base is formed as hollow annular shape and is concentric to sidewall in an operating position. Operating position is formed as the basket closes on the sidewall in a manner of enclosing the open mouth. In this position, the basket positioned as facing up, facing side, facing ground or facing an angular status. A possible embodiment, the basket is also coaxial with the rotational base. In this case, both either basket and rotary base can be nested and circular. The nozzle and the the telescopic arm are carried by the fixing plate in a stable manner over the annular structure.

The invention comprises the rotating joint comprises a bearings and a sled, that the bearings which provided at the proximal end of rotating joint which connected with a telescopic arm formed a cylindrical articulation provided the bearings having radial headway which goes by the rotational base in a manner, and enabled the sled which extending to the outward radially acts upon the rotational base. So, rotary portion of the rotating joint can be arranged in a desired spacing on a sled that can be adjusted radially towards the outside or the inside.

In a preferred embodiment of invention, the maximum length of the telescopic arm is shorter than the length the lateral wall. Thus, sidewall inside of the basket can be located either in an orthogonal position or in an angular position

In a preferred embodiment, rotating joint comprises the adjusting element for locking on telescopic arm at a predetermined angle. In a prospective embodiment, comprises a locking member that secures the length of the telescopic arm for fastening at a predetermined distance on the length of telescopic arm. Thus, after securing the adjusted in the required length of arm at the specified angle by means of a rotating joint, cleaning process is completed scanning the whole sidewall by blasting dry ice from nozzle while the rotation of the nozzle on the rotational base.

A preferred embodiment of the invention, nozzle comprises a pivot which connecting the nozzle to the telescopic arm. So, the angle of the nozzle on the telescopic arm can be adjusted. This changing process can be implemented during the cleaning process by the pivot associated with a motor and with an automatic control unit.

A preferred embodiment of the invention, rotating joint is formed at end of near to the rotational base of the telescopic arm. Thus, rotational base can be fixed directly to basket without leaving a gap behind of it in a rotatable manner

### DESCRIPTION OF THE FIGURES

The additional features and advantages of the invention will emerge example that reference to the accompanying drawings embodiments.
Figure 1 is a side schematic illustration of a vehicle carrying the cleaning apparatus of the invention.
Figure 2 curing of the inventive cleaning device is a schematic side cross sectional view of the mold sidewalls on the applied state.
Figure 3 is perspective schematic representation of a different embodiment of the inventive cleaning device.

**REFERENCE NUMBERS**

| | |
|---|---|
| 1 Carriage | 2 Foldable arm |
| 3 Pivot | 4 Support arm |
| 5 Handle | 6 Joint |
| 10 Basket | 12 Bottom |
| 14 Lateral wall | 16 Inner part |
| 20 Rotational base | 22 Gear |
| 30 Fixing plate | 31 First fixing point |
| 32 Second fixing point | 33 Third fixing point |
| 40 rotating joint | 42 Sled |
| 44 Bearings | 46 Adjustment member |
| 50 Telescopic arm | 51 Guide |
| 52 Boom | 54 Holder part |
| 55 Locking member | 60 Nozzle |
| 62 Inlet | 63 Intake |
| 64 Pivot | 70 Segment mold |
| 80 Sidewall | 84 Center post |
| 90 Bladder | |

### DETAILED DESCRIPTION OF THE INVENTION

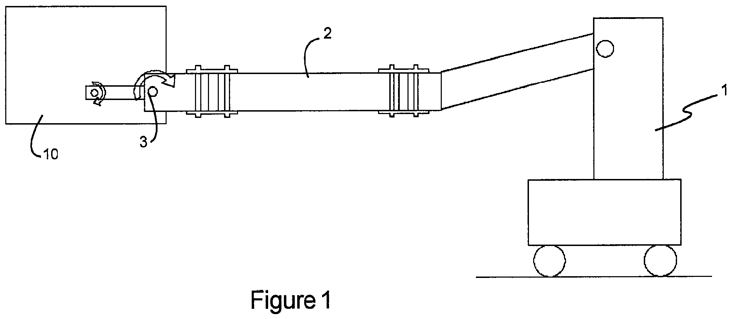

In Figure 1, a cleaning machine used for cleaning of tire curing sidewall (80) comprising a basket (10) and a carriage (1) to carry the basket (10) is shown from the side view schematically. There is a foldable arm (2) located at the end of carriage (1). the basket (10) is mounted to the a free end the foldable arm (2) by means of a pivot (3).

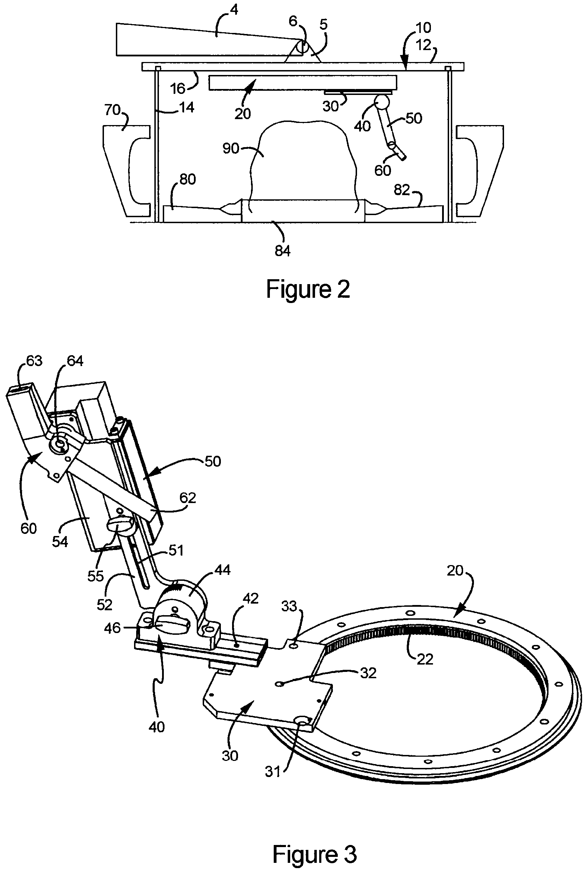

In Figure 2, the carriage (1) connected with the a free end the foldable arm (2) through a handle (5) of basket (10) by a joint. the basket (10) by reversing its position is suppressed on to the sidewall (80) which located on the ground, positioned as facing up, surrounded with segment molds (70).

Basket(10) is formed cylindrically comprises a bottom (12) and at inner part (16) thereof and standing up along the peripheral edges to form a lateral wall (14). In an operating position, the lateral wall (14) which interposed between sidewall (80) and the segment mold (70) provides to form a closed cylindrically chamber between basket (10) and sidewall (80). In such position, a rotating joint (40) provided radially outer portion of the rotational base (20) mounted at the bottom (12) of the basket (10) is positioned from a proximal end of a telescopic arm (50).

Nozzle (60) mounted at the free end of the telescopic arm (50) with the help of a pivot (64).

The angle between telescopic arm (50) and rotating joint (40) is adjusted radially outward in order to prevent contact with the telescopic arm (50) and a bladder (90) which is extending through center post (84) of the center of the sidewall (80) during the movement of the telescopic arm (50) inside of the chamber while the rotational base (20) is rotating.

In Figure 3 a representative embodiment of the cleaning machine as the subject invention is shown in the perspective view. Accordingly, the rotational base (20) formed as a hollow ring empty cavity inside thereof. Rotational base (20) is in a flat form and a gear (22) is surrounding the inner periphery. A series consecutive of holes are drilled on the top edge of the rotatable base (20). A first, second and third fixing point (31, 32, 33) on a flat fixing plate (30) is secured to the rotatable base (20) by means of the the holes where each of them are aligned. Position of the fixing points (31, 32, 33) create an imaginary beam overlapping intersection points to the ring shaped rotatable base (20). Accordingly, fixing plate (30) is secured to the rotatable base (20) in a balanced manner.

A rotating joint (40) is attached to the fixing plate (30) from an edge at radially outer direction in relation to the rotatable base (20). Rotating joint (40) comprising a radially outwardly extending slide (42) in a plate form and a bearing (44) attached to its outer edge. Bearing (44) correspond to a freely rotating joint bearing. An adjustment member (46) is provided on the bearing (44). Adjustment member (46) ensure fixation of the telescoping arm (50) at a predetermined angle from an edge of bearing (44) where the bearing (44) is pivoted.

The telescopic arm (50) is a thin elongated plate and axialy extend at an angle relative to the rotatable base (20). A guide (51) formed as a slit extending inside the arm (52) at a proximal end of the telescopic arm (50) hold a holder part (54) by means of a locking member (55). A nozzle (60) is mounted at the free end of the holder part (54) with a pivot (64). The pivot (64) could be a freely rotating hinge or rotatable end of a motor at the holder part (54) adjusting nozzle (60) position with a control element. Nozzle (60) comprising an intake (63) with narrowing cross-section and an inlet (62) connected to a dry-ice machine in a fluid transportable manner.

Cleaning machine disposed adjacent to a curing mold by means of a carriage (1). Folding arms (2) extend to position the basket (10) closer to the mold halve. The support arm (4) enclose the basket (10) over the sidewall (80).

Subsequently, nozzle (60) rotated at the rotatable base (20) central rotation axis in a way to prevent contact of the nozzle (60) to the bladder (90) by means of the radially outwardly angular position of the rotating joing (40) with respect to the inner radius of the sidewall (80). Nozzle (60) swipe between inner and outer radius by an agitation from its pivot (64) while blasting dry-ice to clean sidewall (80). In a preferred embodiment, basket (10), rotatable base (20) and sidewall (80) are aligned coaxially. Noise due to the blast of dry ice from the nozzle (60) is reduced for outer environment by means of the chamber structure of the basket (10) over the sidewall (80).

When another sidewall (80) is selected, rotating joint (40) is both moved radially outer or inner direction on the slide (42) with respect to its bladder (90) diameter to fix axial position and extention angle of the telescopic arm (50) over the bearing (44) selected radially outer or inner direction to fix the rotational position. Additionaly, the extending distance of the telescopic arm (50) inside the chamber is configured by sliding of the holder part (54) and secured by the locking member

## Claims

1. A cleaning machine for tire curing side mold (80) that comprises
a basket (10),
a rotational base (20) which mounted into thereof, where a rotating joint (40) mounted radially to the outward direction on the rotational base (20) and a telescopic arm (50) carrying a nozzle (60) at the free end thereof and fastened on the rotational base (20) with the rotating joint (40), wherein the rotational base (20) formed as hollow annular shape and is concentric to sidewall (80) in an operating position, wherein the a nozzle (60) provided in a movable manner on the rotational base (20), of extending towards the open side of the basket (10) and having an intake (63) connected to inlet (62) in a fluid transferrable manner
**characterized in that** the rotating joint (40) comprises a bearings (44) and a slide (42), that the bearings (44) which provided at the proximal end of rotating joint (40) which connected with a telescopic arm (50) formed a cylindrical articulation provided the bearings (44) having radial headway which goes by the rotational base (20) in a manner, and enabled the slide (42) which extending to the outward radially acts upon the rotational base (20).

2. A cleaning machine according to the claim 1 wherein the maximum length of the telescopic arm (50) is shorter than the lengthf the lateral Wall (14).

3. A cleaning machine according to claims 1 or 2, wherein rotating joint (40) having the adjustment member (46) for locking on telescopic arm (50) at a predetermined angle.

4. A cleaning machine according to the anyone of the preceding claims, wherein a locking member (55) that secures the length of the telescopic arm (50) for fastening at a predetermined distance on the length of telescopic arm (50).

5. A cleaning machine according to the anyone of the preceding claims, wherein nozzle (60) having a pivot (64) which connecting the nozzle to the telescopic arm (50).

6. A cleaning machine according to the anyone of the preceding claims, wherein the rotating joint (40) is formed at end of near to the rotational base (20) of the telescopic arm (50).

## Patentansprüche

1. Reinigungsmaschine für eine Reifenaushärtungsseitenform (80), umfassend
einen Korb (10),
eine Drehbasis (20), die in ihr montiert ist, wo ein Drehgelenk (40), das radial nach außen auf der Drehbasis (20) montiert ist, und ein Teleskoparm (50), der eine Düse (60) an ihrem freien Ende trägt und an der Drehbasis (20) mit dem Drehgelenk (40) befestigt ist, wobei die Drehbasis (20) als hohle ringförmige Form gebildet ist und konzentrisch zur Seitenwand (80) in einer Betriebsstellung ist
wobei die Düse (60), die beweglich auf der Drehbasis (20) vorgesehen ist, sich in Richtung der offenen Seite des Korbes (10) erstreckt und einen Einlass (63) aufweist, der mit dem Eingang (62) in einer fluidübertragbaren Weise verbunden ist
**dadurch gekennzeichnet, dass** das Drehgelenk (40) ein Lager (44) und einen Schieber (42) umfasst, dass die Lager (44), die am proximalen Ende des Drehgelenks (40) vorgesehen sind, das mit einem Teleskoparm (50) verbunden ist, ein zylindrisches Gelenk bildeten, wobei die Lager (44) eine radiale Laufbahn aufweisen, die durch die Drehbasis (20) in einer Weise verläuft, und den Schieber (42) ermöglichen, der sich nach außen erstreckt und radial auf die Drehbasis (20) wirkt.

2. Reinigungsmaschine nach Anspruch 1, wobei die maximale Länge des Teleskoparms (50) kürzer ist als die Länge der Seitenwand (14).

3. Reinigungsmaschine nach Ansprüche 1 oder 2, wobei das Drehgelenk (40) mit dem Verstellelement (46) zum Verriegeln am Teleskoparm (50) in einem vorbestimmten Winkel angeordnet ist.

4. Reinigungsmaschine gemäß dem vorhergehenden Ansprüche, wobei ein Verriegelungselement (55), das die Länge des Teleskoparms (50) sichert, zur Befestigung in einem vorbestimmten Abstand auf der Länge des Teleskoparms (50) dient.

5. Reinigungsmaschine nach einem der vorhergehenden Ansprüche, wobei die Düse (60) einen Drehpunkt (64) aufweist, der die Düse mit dem Teleskoparm (50) verbindet.

6. Reinigungsmaschine nach einem der vorhergehenden Ansprüche, wobei das Drehgelenk (40) am Ende in der Nähe der Drehbasis (20) des Teleskoparms (50) gebildet ist.

## Revendications

1. Machine de nettoyage pour moule latéral de vulcanisation de pneus (80) qui comprend un panier (10),
une base rotative (20) qui y est montée, où un joint tournant (40) monté radialement vers l'extérieur sur la base rotative (20) et un bras télescopique (50) portant une buse (60) à son extrémité libre et fixé sur la base rotative (20) par le joint tournant (40) dans laquelle la base rotative (20) a une forme annulaire creuse et est concentrique à la paroi latérale (80) dans une position de fonctionnement
dans laquelle la buse (60) prévue de manière mobile sur la base rotative (20), s'étendant vers le côté ouvert du panier (10) et ayant une entrée (63) reliée à l'entrée (62) d'une manière transférable par fluide
**caractérisé en ce que** le joint tournant (40) comprend un palier (44) et un coulisseau (42), **en ce que** les paliers (44) qui sont prévus à l'extrémité proximale d'un joint tournant (40) qui est reliée à un bras télescopique (50) forment une articulation cylindrique, les paliers (44) ayant l'écartement radial qui passe par la base rotative (20) d'une manière, et a permis au coulisseau (42) qui s'étend radialement vers l'extérieur d'agir sur la base rotative (20).

2. Machine de nettoyage selon la revendication 1 dans laquelle la longueur maximale du bras télescopique (50) est plus courte que la longueur de la Paroi latérale (14).

3. Machine de nettoyage selon les revendications 1 ou 2, dans laquelle le joint tournant (40) comportant l'élément de réglage (46) pour le verrouillage sur le bras télescopique (50) selon un angle prédéterminé.

4. Machine de nettoyage selon l'une des revendications précédentes, dans lequel un élément de verrouillage (55) qui fixe la longueur du bras télescopique (50) pour la fixation à une distance prédéterminée sur la longueur du bras télescopique (50).

5. Machine de nettoyage selon l'une des revendications précédentes, dans laquelle la buse (60) a un pivot (64) qui relie la buse au bras télescopique (50).

6. Machine de nettoyage selon l'une des revendications précédentes, dans laquelle le joint tournant (40) est formée à l'extrémité proche de la base rotative (20) du bras télescopique (50).
